(19) **Europäisches Patentamt / European Patent Office / Office européen des brevets**

(11) **EP 3 317 229 B2**

(12) **NOUVEAU FASCICULE DE BREVET EUROPEEN**
Après la procédure d'opposition

(45) Date de publication et mention de la décision concernant l'opposition:
**09.11.2022 Bulletin 2022/45**

(45) Mention de la délivrance du brevet:
**29.01.2020 Bulletin 2020/05**

(21) Numéro de dépôt: **16736248.2**

(22) Date de dépôt: **29.06.2016**

(51) Classification Internationale des Brevets (IPC):
**C02F 1/44** (2006.01)    **B01D 61/12** (2006.01)
**B01D 61/06** (2006.01)    **C02F 103/08** (2006.01)

(52) Classification Coopérative des Brevets (CPC):
**C02F 1/441; B01D 61/06; B01D 61/08; B01D 61/12; C02F 1/008;** B01D 2311/14; B01D 2311/16; B01D 2313/243; B01D 2313/246; B01D 2313/36; B01D 2315/20; C02F 2103/08; C02F 2201/009; C02F 2209/03; C02F 2209/40;

(Cont.)

(86) Numéro de dépôt international:
**PCT/IB2016/053869**

(87) Numéro de publication internationale:
**WO 2017/002022 (05.01.2017 Gazette 2017/01)**

(54) **PROCEDE DE PILOTAGE D'UNE INSTALLATION DE DESSALEMENT ALIMENTEE PAR UNE SOURCE D' ENERGIE RENOUVELABLE ET INSTALLATION ASSOCIEE**

VERFAHREN ZUR STEUERUNG EINER VON EINER ERNEUERBAREN ENERGIEQUELLE GESPEISTEN ENTSALZUNGSANLAGE UND ZUGEHÖRIGE ANLAGE

METHOD FOR CONTROLLING A DESALINATION PLANT FED BY A SOURCE OF RENEWABLE ENERGY AND ASSOCIATED PLANT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats de validation désignés:
**MA**

(30) Priorité: **02.07.2015 FR 1556236**

(43) Date de publication de la demande:
**09.05.2018 Bulletin 2018/19**

(73) Titulaire: **Mascara Nouvelles Technologies 28630 Gellainville (FR)**

(72) Inventeurs:
• **VERGNET, Marc**
  **45000 Orléans (FR)**
• **HAUDEBOURG, Maxime**
  **28120 Marcheville (FR)**

(74) Mandataire: **IPAZ**
  **16, rue Gaillon**
  **75002 Paris (FR)**

(56) Documents cités:
**CN-A- 103 964 549      CN-U- 202 358 969**
**CN-U- 202 808 493      CN-U- 203 593 678**
**DE-A1-102011 115 057    US-A1- 2011 006 005**

• **BALTASAR PEATE ET AL: "Assessment of a stand-alone gradual capacity reverse osmosis desalination plant to adapt to wind power availability: A case study", ENERGY, PERGAMON PRESS, OXFORD, GB, vol. 36, no. 7, 3 avril 2011 (2011-04-03), pages 4372-4384, XP028230473, ISSN: 0360-5442, DOI: 10.1016/J.ENERGY.2011.04.005 [extrait le 2011-04-07]**
• **Hydro Leduc: "Accumulateurs hydropneumatiques", , 17 décembre 2014 (2014-12-17), XP055290803, Extrait de l'Internet: URL:https://web.archive.org/web/2015080706 1518/http://www.hydroleduc.com/images/link s/catalogues/hydro leduc documentation_fr/accumulateurs hydropneumatiques/hydroleduc_accu_fr.pdf [extrait le 2016-07-25]**

EP 3 317 229 B2

(52) Classification Coopérative des Brevets (CPC):
(Cont.)
C02F 2301/043; C02F 2301/046; C02F 2303/10;
Y02A 20/131; Y02A 20/212; Y02W 10/30

(52) Classification Coopérative des Brevets (CPC):
(Cont.)
C02F 2301/043; C02F 2301/046; C02F 2303/10;
Y02A 20/131; Y02A 20/212; Y02W 10/30

**Description**

L'invention a pour objet un procédé de pilotage d'une installation de dessalement d'eau de mer par osmose inverse ainsi que l'installation de dessalement associée, ladite installation étant alimentée par une source d'énergie renouvelable.

Il est connu que, dans une installation de dessalement d'eau par osmose inverse, la consommation énergétique des pompes haute pression représente environ les deux tiers de la consommation énergétique et environ 40 à 60 % du coût d'exploitation. Le dessalement par osmose inverse utilise la mise sous pression du liquide salé au-delà de sa pression osmotique afin de permettre la perméation de l'eau seule (sans les sels dissous) au travers d'une membrane semi- perméable.

Il est connu de mesurer les principaux paramètres de fonctionnement au moyen de capteurs de débit, pression, conductivité, température. Ils concernent l'eau prétraitée alimentant l'installation, le perméat et le concentrât sortant de l'installation. Il est également connu d'intégrer dans ces installations de dessalement des unités de récupération d'énergie afin de récupérer l'énergie encore présente dans le concentrât à la sortie des membranes d'osmose inverse.

La connaissance du bilan énergétique du procédé permet alors de choisir les équipements et de dimensionner les installations en prenant en compte la consommation d'énergie.

Cependant, une fois les installations construites, les paramètres d'entrée varient de façon non maîtrisée, nécessitant la mise en place de boucles de régulation afin de maintenir le système stable. Il est par exemple connu de réguler le débit de perméat afin de compenser les fluctuations de température, de salinité, de vieillissement et de colmatage des membranes d'osmose inverse.

Toutefois, les consignes introduites sur la base d'hypothèses de salinité, température et conditions hydrauliques, sont bien souvent prévues pour permettre de remplir les conditions garanties pour le volume de production et la qualité de l'eau produite, sans nécessairement prendre en compte la consommation énergétique.

Une prise de conscience de la question énergétique commence cependant à s'imposer avec par exemple le document FR2933969 qui propose d'intégrer le paramètre de la consommation énergétique dans le pilotage des installations de dessalement, en dotant la boucle haute pression de l'installation d'osmose inverse d'une régulation secondaire ayant pour objectif la diminution de la consommation énergétique du système. Plus précisément, la régulation secondaire comprend des moyens de calcul programmés pour déterminer, à partir des conditions de fonctionnement de l'installation fournies par des capteurs, une combinaison de valeurs de consigne pour le débit de la pompe haute pression, le taux de mélange du récupérateur d'énergie, le taux de conversion, le cas échéant la température de l'eau d'alimentation et la salinité d'eau d'alimentation. Cette combinaison correspond alors à la consommation énergétique minimale du système et garantit le minimum requis pour les quantités et qualités d'eau produite ainsi que la tenue des équipements.

Toutefois, la gestion de la consommation énergétique ne peut plus être traitée par les modèles précédemment cités, dès lors que l'alimentation prévue pour l'installation de dessalement repose uniquement sur des sources d'énergie renouvelable.

L'art antérieur pertinent à l'objet de la présente invention est représenté par les documents CN 202 808 493 U, CN 202 358 969 U, CN 203 593 678 U et CN 103 964 549 A.

C'est pourquoi, l'invention a pour objet un procédé de pilotage d'une installation de dessalement d'eau par osmose inverse et alimentée par une source d'énergie renouvelable, ainsi que l'installation en elle-même, le procédé et l'installation optimisant leur consommation énergétique en fonction de la puissance fournie par la source d'énergie renouvelable. Plus précisément, l'invention consiste à inverser les priorités du pilotage de l'installation de dessalement en asservissant le fonctionnement de l'installation à la puissance fournie par la source d'énergie renouvelable.

A cet effet, l'invention a pour objet un procédé de pilotage d'une installation de dessalement comprenant au moins :

- une ligne d'alimentation en eau de mer d'une unité de filtration dotée de membranes de filtration tangentielle à osmose inverse, ladite ligne d'alimentation étant 5 dotée successivement en partant de son entrée d'une première pompe basse pression et d'une seconde pompe haute pression dont le débit est proportionnel à sa vitesse de rotation,
- une ligne d'évacuation de perméat issu des membranes vers une unité de traitement et de stockage d'eau douce,
- une ligne d'évacuation de concentrât,
- une boucle piquée sur la ligne d'alimentation en amont et en aval de la pompe haute pression, la boucle traversant une unité de récupération d'énergie dotée d'un échangeur de pression et d'une pompe dite « Booster », ladite boucle étant également connectée à la ligne d'évacuation de concentrât, ladite ligne d'évacuation traversant l'échangeur de pression,
- des moyens d'alimentation en courant issu d'une source d'énergie renouvelable et alimentant suivant des puissances variables les pompes basse pression, haute pression et Booster, les moyens d'alimentation comportant un générateur photovoltaïque alimentant chacune des pompes basse pression, Booster et haute pression au moyen d'un premier, second et troisième convertisseur de puissance à fréquence variable, dédié chacun à une seule pompe, lesdits convertisseurs de puissance étant pilotés selon un protocole MPPT (Maximum Power Point Tracking),

caractérisé en ce que le procédé de pilotage comprend au moins un mode d'exploitation dans lequel :

- le débit dans ligne d'évacuation de concentrât est maintenu lors de son passage dans les unités de récupération d'énergie, à une valeur sensiblement égale (la différence entre les débits n'excédant pas 5%) à celle du débit de la pompe Booster, lesdits débits restant supérieurs ou égaux au débit minimum requis pour le fonctionnement de l'unité de filtration,
- la pression en sortie de la pompe Booster est égale à celle de la pression en sortie de la pompe haute pression, car maintenue au moyen de l'échangeur de pression et de la pompe booster qui compense les pertes de charges et le rendement de l'échangeur,
- le débit de la pompe haute pression est fonction de la fréquence et de la puissance du courant fourni par les moyens d'alimentation,

de sorte que le débit de perméat en sortie de l'unité de filtration est sensiblement égal (la différence entre les débits n'excédant pas 5%) au débit de la pompe haute pression.

Des caractéristiques optionnelles de l'invention, complémentaires ou de substitution, sont énoncées ci-après.

Le procédé de pilotage peut comprendre un premier mode de démarrage de l'installation comprenant la mise en route successivement des pompes basse pression, Booster et haute pression dès lors que la puissance fournie par les moyens d'alimentation dépasse une valeur de consigne $P_{HP0}$.

Avantageusement, le taux de conversion, défini par le quotient entre le débit de perméat et la somme du débit de la pompe haute pression et du débit de la pompe Booster, reste inférieur à 40 %, de sorte que le rendement des membranes est optimisé et que la salinité des concentrâts reste faible.

Dans le cas où l'installation comprend en outre un bypass muni d'une vanne de régulation de pression permettant à la ligne d'évacuation de concentrât de court-circuiter les unités de récupération d'énergie, il est préférable de piloter lors du démarrage de la pompe haute pression, la fermeture progressive de la vanne de régulation de pression de sorte que l'augmentation de la pression traversant les unités de filtration reste inférieure à 1 bar/s, et préférentiellement inférieure à 0,5 bar/s.

Selon une première variante du mode d'exploitation, le débit en sortie de la pompe Booster est maintenu à une valeur constante et suffisante de sorte que, quel que soit le débit de perméat, les conditions de filtration tangentielle recommandées sont respectées.

Selon une seconde variante du mode d'exploitation, le débit en sortie de la pompe Booster est asservi à la puissance alimentant la pompe haute pression, l'asservissement du débit pouvant être une fonction discrète (par palier) ou bien continue du débit de la pompe haute pression.

Dans tous les cas, c'est le contrôle du débit dans l'unité de récupération d'énergie qui permet d'assurer un débit dans la « au moins une » unité de filtration, supérieur au débit minimum préconisé par les fabricants de membranes.

Le procédé de pilotage peut comprendre un mode d'arrêt de l'installation dans lequel les pompes haute pression, Booster et basse pression sont successivement mises à l'arrêt dès lors que la puissance fournie par les moyens d'alimentation devient inférieure à une valeur de consigne $P_{HP0}$.

Dans le cas où l'installation comprend en outre un bypass muni d'une vanne de régulation de pression permettant à la ligne d'évacuation de concentrât de court-circuiter les unités de récupération, il est préférable, dès l'arrêt de l'installation, de piloter l'ouverture progressive de la vanne de régulation de pression, de sorte que, sous l'effet de la pression osmotique, du perméat issu des unités de traitement et de stockage d'eau douce est aspiré dans les unités de filtration pour chasser le concentrât vers les rejets via le bypass et conditionner les membranes en eau douce.

Il est avantageux de contrôler l'ouverture progressive de la vanne de régulation de pression de sorte que la diminution de la pression dans les unités de filtration reste inférieure à 1 bar/s, préférentiellement inférieure à 0,5 bar/s.

Selon un perfectionnement, l'installation de dessalement comprend en outre un accumulateur de pression piqué sur la ligne d'alimentation en eau de mer, entre la pompe haute pression et l'unité de filtration, ledit accumulateur étant apte à compenser les variations de pression en sortie de la pompe haute pression, selon des rampes de variation inférieures à 0,5 bars/sec, de manière à ménager les membranes de filtration.

Une des caractéristiques de l'invention est que le débit de perméats et le taux de conversion évoluent de manière continue et parallèle, entre zéro et une valeur maximum, et ce, en fonction de la puissance fournie par les moyens d'alimentation en courant.

L'invention a également pour objet une installation de dessalement comprenant au moins :

- une ligne d'alimentation en eau de mer d'une unité de filtration dotée de membranes de filtration tangentielle à osmose inverse, ladite ligne d'alimentation étant dotée successivement en partant de son entrée d'une première pompe basse pression et d'une seconde pompe haute pression dont le débit est fonction de la fréquence et de la puissance du courant fourni par les moyens d'alimentation, et préférentiellement proportionnel à la fréquence et à la puissance du courant fourni par les moyens d'alimentation,

- une ligne d'évacuation de perméat issu des membranes vers une unité de traitement et de stockage d'eau douce,

- une ligne d'évacuation de concentrât,

- une boucle piquée sur la ligne d'alimentation en amont et en aval de la pompe haute pression, la boucle traversant une unité de récupération d'énergie dotée d'un échangeur de pression et d'une pompe dite « Booster », ladite boucle étant également connectée à la ligne d'évacuation de concentrât, ladite ligne d'évacuation traversant l'échangeur de pression,

- un bypass muni d'une vanne de régulation de pression, per- mettant à la ligne d'évacuation de concentrât de court-circuiter les unités de récupération d'énergie,

- des moyens d'alimentation en courant issu d'une source d'énergie renouvelable et suivant des fréquences et des puissances variables les pompes basse pression, haute pression et Booster,

les moyens d'alimentation comportant un générateur photovoltaïque alimentant chacune des pompes basse pression, Booster et haute pression au moyen d'un, respectivement, premier, second et troisième convertisseurs de puissance à fréquence variable, lesdits convertisseurs de puissance étant pilotés selon un protocole MPPT (Maximum Power Point Tracking).

Des caractéristiques optionnelles de l'invention, complémentaires ou de substitution, sont énoncées ci-après.

La ligne d'alimentation en eau de mer peut comprendre en aval de la pompe basse pression et en amont du piquage de la boucle situé en amont de la pompe haute pression, un bloc de prétraitement suivi d'un préfiltre, lui-même suivi d'un purgeur d'air.

Selon un mode préférentiel, la pompe haute pression est une pompe volumétrique.

Selon un perfectionnement, l'installation de dessalement comprend en outre un accumulateur de pression piqué sur la ligne d'alimentation en eau de mer, entre la pompe haute pression et l'unité de filtration, ledit accumulateur étant apte à compenser les variations de pression en sortie de la pompe haute pression, selon des rampes de variation inférieures à 0,5 bars/sec, de manière à ménager les membranes de filtration.

Selon un mode de réalisation particulier, l'accumulateur de pression est une enceinte tubulaire communiquant avec la ligne et renfermant un volume d'azote contenu dans une enveloppe à une pression initiale ajustée à la salinité de l'eau de mer, par exemple 28 bars.

D'autres avantages et particularités de l'invention apparaîtront à la lecture de la description détaillée de mises en oeuvre et de modes de réalisation nullement limitatifs, et des dessins annexés suivants :

- la FIGURE 1 représente une vue schématique d'une installation de dessalement d'eau de mer conforme à un mode de réalisation de l'invention,

- la FIGURE 2 représente le schéma de principe de l'invention

- la FIGURE 3 est une courbe de résultats donnant le taux de conversion et le débit de perméat en fonction de la puissance fournie par la source d'énergie renouvelable.

- la FIGURE 4 représente le schéma d'un perfectionnement de l'invention

- les FIGURES 5 et 6 représentent des détails du perfectionnement de l'invention

- la FIGURE 7 représente un exemple de réalisation de l'invention

Les modes de réalisation décrits ci-après étant nullement limitatifs, on pourra notamment considérer des variantes de l'invention ne comprenant qu'une sélection de caractéristiques décrites, isolées des autres caractéristiques décrites (même si cette sélection est isolée au sein d'une phrase comprenant ces autres caractéristiques), si cette sélection de caractéristiques est suffisante pour conférer un avantage technique ou pour différencier l'invention par rapport à l'état de la technique antérieure. Cette sélection peut comprendre au moins une caractéristique, de préférence fonctionnelle sans détails structurels, ou avec seulement une partie des détails structurels si cette partie uniquement est suffisante pour conférer un avantage technique ou pour différencier l'invention par rapport à l'état de la technique antérieure.

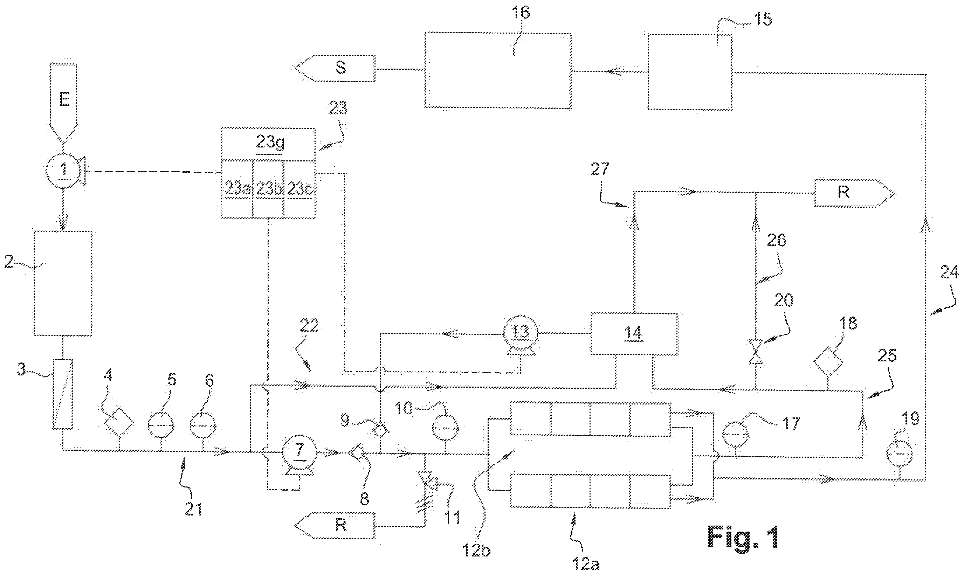

La figure 1 décrit une installation de dessalement comprenant une ligne 21 qui alimente en eau de mer une unité de filtration 12a et une unité de filtration 12b dotées de membranes de filtration tangentielle à osmose inverse.

On entend par osmose inverse un procédé de purification de l'eau contenant des matières en solution par un système de filtrage très fin qui ne laisse passer que les molécules d'eau. Le principe est fondé sur le fait que si deux solutions de concentrations différentes en soluté (en l'occurrence du sel) sont placées de chaque côté d'une membrane filtre, l'eau franchira la membrane par osmose jusqu'à ce que les concentrations s'équilibrent ou que la différence de pression dépasse la pression osmotique. Le déplacement d'eau fait alors diminuer la concentration dans le compartiment où l'eau afflue et la fait augmenter dans le compartiment d'où elle vient. Inversement, en exerçant dans un des compartiments une pression hydrostatique qui dépasse la pression osmotique, on force l'eau à quitter le compartiment sous pression en dépit de l'augmentation de concentration en soluté qui s'y produit, et de la dilution qui se fait dans l'autre compartiment.

Le cadre de l'application au dessalement de l'eau de mer par osmose inverse utilise donc la mise sous pression du liquide salé au-delà de sa pression osmotique afin de permettre la perméation de l'eau seule (sans les sels dissous) au travers d'une membrane semi- perméable. Le compartiment salé se concentre en sel. Le compartiment de perméat est alimenté en eau délestée de la majorité de ses sels. La membrane semi-perméable est caractérisée par son rejet de sels (ou passage de sel exprimé en %) et par sa perméabilité à l'eau définie à une température donnée, généralement à 25°C. Le système, alimenté en continu avec de l'eau de mer, permet de collecter en continu de l'eau douce délestée de ses sels du côté perméat de la membrane, et une solution concentrée du côté concentrât de la membrane.

Le taux de conversion est défini comme étant le rapport du débit de perméat au débit total d'alimentation de la membrane, et permet de caractériser le fonctionnement hydraulique de l'installation.

La membrane d'osmose inverse est mise en oeuvre dans des modules de type spirale ou capillaires ou tubulaires, les modules étant agencés dans des tubes de pression, en montage « parallèle » et/ou « série ». L'eau d'alimentation est mise sous pression par une pompe haute pression, ou moyen équivalent.

Ce procédé naturel permet de ne pas stocker les contaminants, à l'inverse des filtres classiques. Le procédé est dit "inverse" car il nécessite une pression suffisante pour "forcer" l'eau pure à passer à travers la membrane. Ce procédé permet généralement d'éliminer de 98% à 99% des particules solides dissoutes et 100% des micro-organismes.

D'une manière classique, une membrane se définit par l'association d'un support poreux en matière organique ou inorganique et d'une ou plusieurs couches séparatrices. Le rôle des couches est d'assurer la séparation des espèces moléculaires ou particulaires tandis que le rôle du support est de permettre, par sa résistance mécanique, la réalisation de couches de faible épaisseur.

Ainsi, le support permet d'assurer la résistance mécanique sans participer à la résistance hydraulique de la membrane, tandis que la couche de séparation définit la perméabilité sans participer à la résistance mécanique. Suivant le principe de la filtration tangentielle, le fluide à traiter circule à grande vitesse sur la surface des canaux afin de générer une contrainte de cisaillement qui re-disperse les matières déposées sur cette surface.

Il apparaît ainsi un frottement du fluide sur la surface des canaux conduisant à des pertes de charge qui varie linéairement en fonction de la longueur des canaux. Cette perte de charge dépend de paramètres dimensionnels tels que la longueur de la membrane, de son diamètre hydraulique et de paramètres expérimentaux, tels que la vitesse de circulation, la viscosité et la masse volumique du fluide à traiter. Comme la force agissante de la filtration est une pression, il apparaît une variation décroissante de la pression du fluide à traiter le long des canaux. Un tel gradient de pression modifie l'écoulement transversal du perméat qui traverse la couche séparatrice, puis le corps poreux. La filtration par osmose inverse permet d'éliminer totalement ou en quasi-totalité, les nitrates, pesticides, bactéries, virus, microbes, amiante, herbicides, calcaire, mercure, plomb, et autres métaux lourds ainsi que tout ce qui est dissous.

Concernant maintenant l'architecture de l'installation de dessalement et en partant de son entrée E, la ligne d'alimentation 21 traverse successivement une première pompe basse pression 1 dont la fonction est de puiser l'eau de mer, et une seconde pompe haute pression 7 dont le débit est proportionnel à sa vitesse de rotation. La ligne d'alimentation 21 traverse ensuite à l'issue de la pompe haute pression les unités de filtration 12a et 12b.

On entend par pompe basse pression, une pompe apte à travailler à une pression inférieure à 10 bars.

On entend par pompe haute pression dont le débit est proportionnel à sa vitesse de rotation, une pompe dans laquelle la fréquence et la puissance fournies au moteur de la pompe détermine sa vitesse de rotation qui elle-même détermine son débit. La pompe haute pression est choisie préférentiellement dans la catégorie des pompes volumétriques, appelées aussi « pompes à déplacement positif ». On pourra choisir par exemple les pompes à lobes et les pompes à cavité progressive. D'autres types de pompes peuvent toutefois être envisagés, leur vitesse est alors asservie à des débitmètres placés sur la ligne d'alimentation.

En sortie des unités de filtration 12a et 12b, une ligne 24 permet d'évacuer l'eau douce filtrée (appelée perméat) vers tout d'abord un réservoir de stockage 15. Ce dernier débouche dans une unité 16 destinée à traiter l'eau douce, en vue de sa consommation. Toujours en sortie des unités de filtration, une ligne 25 permet d'évacuer l'eau chargée en sel (appelée concentrât) vers une issue 27 des rejets R, généralement en mer.

L'installation comprend également une boucle 22 piquée sur la ligne d'alimentation 21 en amont et en aval de la pompe haute pression 7. Cette boucle traverse une unité de récupération d'énergie dotée elle-même d'un échangeur de pression 14 et d'une pompe 13 dite « Booster ».

La pompe Booster est également choisie préférentiellement dans la catégorie des pompes volumétriques, appelées aussi « pompes à déplacement positif ». On retrouve par exemple les pompes à piston, à lobes et les pompes à cavité progressive. D'autres types de pompes peuvent toutefois être envisagés, leur fréquence est alors asservie à des débitmètres placés sur la ligne d'alimentation.

La ligne d'évacuation 25 traverse également l'échangeur de pression 14. L'échangeur de pression est préférentiellement un dispositif à déplacement positif de type DANFOSS ISave ©, ERI PX ©, ou Calder DWEER © ou KSB ©, ou autres systèmes similaires. De ce fait, le concentrât pressurisé circulant dans la ligne 25 transfère sa pression par mise en contact indirecte, à l'eau de mer circulant dans la boucle 22.

Cette boucle 22 est également connectée à la ligne 25 d'évacuation pour permettre, dans certains cas, le bypass des unités de filtration et un rejet direct. L'installation comprend des moyens 23 alimentant les pompes Booster, basse pression et haute pression, suivant une puissance variable.

Conformément à l'invention, l'énergie fournie par les moyens d'alimentation 23 provient d'une source d'énergie renouvelable.

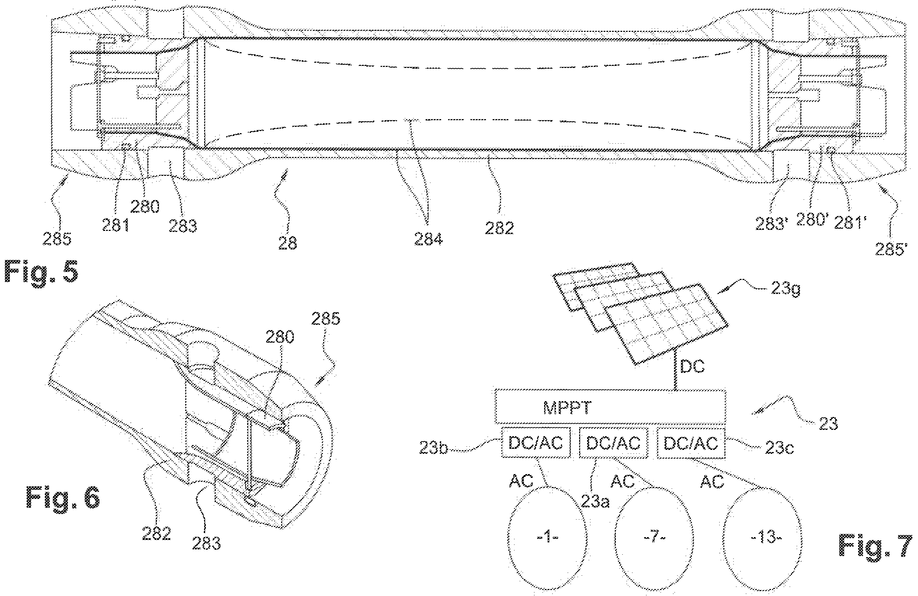

Selon un premier mode de réalisation et tel que représenté sur la figure 7, les moyens d'alimentation consistent en un générateur photovoltaïque ainsi qu'un premier, second et troisième convertisseur de puissance à fréquence variable. Chacun des convertisseurs est dédié à l'une des trois pompes basse pression, Booster et haute pression. Afin de répartir de manière optimale la puissance générée de façon variable par le générateur photovoltaïque, les convertisseurs de puissance sont pilotés successivement selon un protocole MPPT (Maximum Power Point Tracking).

De manière avantageuse, la ligne d'alimentation en eau de mer 21 comprend en amont des piquages de la boucle 22 et de la pompe basse pression 7, un bloc de prétraitement suivi d'un préfiltre, lui-même suivi d'un purgeur d'air. Le bloc de prétraitement 2 permet d'abaisser significativement le pouvoir colmatant de l'eau de mer conformément aux recommandations des fournisseurs de membranes en filtrant les matières en suspensions et en éliminant les bactéries. Le préfiltre 3 est un filtre de sécurité pour la pompe haute pression et la pompe Booster, il permet d'affiner la filtration pour toutes particules de diamètre supérieur à 3 microns. Le purgeur d'air 4 permet d'évacuer de manière manuelle ou automatique l'air pompé à l'entrée et emprisonné dans la ligne d'alimentation 21.

De manière à contrôler le débit et la pression de l'eau de mer admise dans l'installation avant filtration, la ligne d'alimentation en eau de mer 21 comprend également un débitmètre 5 et un capteur de pression 6.

De manière à contrôler les variations de pression au niveau des unités de filtration, un capteur de pression respectivement 10 et 17 est avantageusement prévu en entrée des unités de filtration 12 ainsi qu'en sortie au niveau de la ligne 25 d'évacuation de concentrât.

De manière à mesurer en temps réel le débit de perméat $Q_{24}$, un débitmètre 19 est ménagé au niveau de la ligne 24 d'évacuation des perméats.

De manière à interdire le reflux de l'eau de mer en direction des pompes Booster 13 et haute pression 7, des clapets anti-retour référencés respectivement 9 et 8 sont ménagés en sortie de chacune des pompes.

De manière à ce que la ligne d'évacuation de concentrât 25 puisse rejoindre l'issue 27 des rejets R, sans traverser l'échangeur de pression 14 des unités de récupération d'énergie, un bypass 26 muni d'une vanne pilotée 20 est piqué sur la ligne 25 en amont des unités de récupération d'énergie.

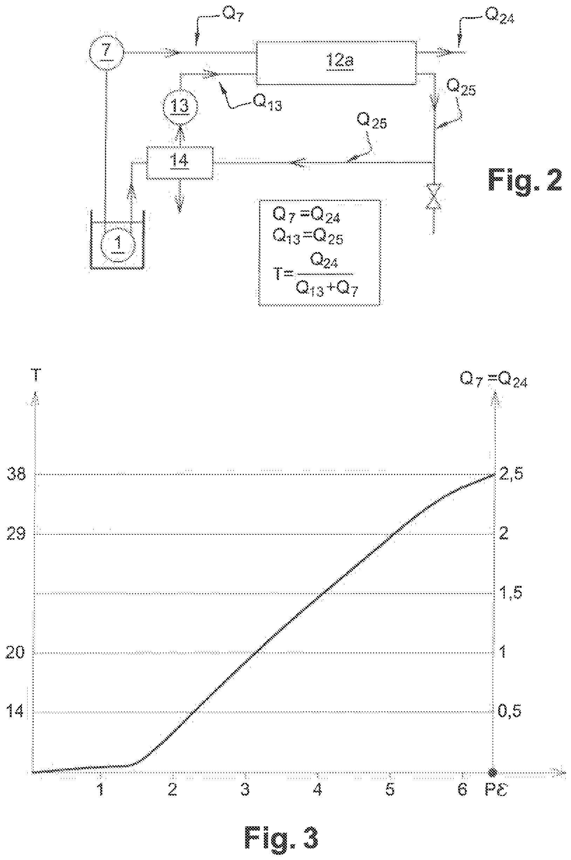

En ce qui concerne maintenant le procédé de pilotage d'une installation de dessalement d'eau de mer du type de celle décrite précédemment, le procédé de pilotage comprend au moins un mode d'exploitation, c'est-à-dire un mode dans lequel de l'eau douce est produite, qui se définit comme ci-après en corrélation avec la figure 2.

Tout d'abord, on maintient le débit $Q_{13}$ de la pompe Booster à une valeur supérieure à un seuil $Q_{13min}$, supérieur ou égal au débit minimum $Q_{12min}$ requis pour le fonctionnement des unités de filtration. En d'autre termes, le débit d'eau de mer issue de la pompe Booster et entrant dans les unités de filtration 12, doit être supérieur ou égal à la valeur minimum $Q_{12min}$ de débit des unités de filtration 12, à partir de laquelle les conditions de filtration tangentielle recommandées par les fournisseur de membranes sont respectées. En d'autres termes encore, c'est le contrôle du débit dans l'unité de récupération d'énergie qui permet d'assurer un débit dans la « au moins une » unité de filtration, supérieur au débit minimum préconisé par les fabricants de membranes.

Parallèlement, on maintient le débit $Q_{25}$ dans la ligne d'évacuation de concentrât en sortie des unités de filtration, à une valeur sensiblement égale à la valeur du débit $Q_{13}$ produit par la pompe Booster. Ce contrôle du débit $Q_{25}$ dans ligne d'évacuation de concentrât s'effectue lors de la traversée des unités de récupération d'énergie constituée de l'échangeur de pression 14 et de la pompe Booster 13. On entend par «valeur sensiblement égale à », le fait que la différence entre les débits n'excède pas 5%.

De même, on maintient la pression en sortie de la pompe Booster à une valeur égale à la valeur de la pression en sortie de la pompe haute pression. Le gain en pression de l'eau de mer venant de la pompe basse pression s'effectue lors de son passage dans l'échangeur 14 et lors de son passage dans la pompe booster. Cette dernière permet de compenser la différence de pression entre la pression dans la ligne d'évacuation des concentrâts et la pression en entrée des unités de filtration. Elle permet aussi de compenser les très faibles pertes de charges dues au rendement de l'échangeur de pression. De cette façon, l'eau de mer issue de la pompe Booster entre dans les unités de filtration à une pression égale à celle qui règne dans les unités de filtration, et peut ainsi être filtrée.

De cette façon, compte tenu du fait que la somme des débits entrant dans les unités de filtration doit être égale à la somme des débits sortants, le débit $Q_{24}$ de perméat en sortie des unités de filtration est sensiblement égal au débit $Q_7$ de la pompe haute pression.

De plus, compte tenu du fait qu'on asservit le débit $Q_7$ de la pompe haute pression à la fréquence et à la puissance fournie par les moyens d'alimentation 23, lesquelles fréquence et puissance étant variables du fait de la source d'énergie renouvelable, le débit $Q_{24}$ de perméat en sortie des unités de filtration est fonction de la puissance disponible fournie par la source d'énergie renouvelable.

En se reportant à la figure 2, il apparaît que la portion de boucle 22 remplie d'eau de mer qui traverse les unités de récupération d'énergie, pour ensuite traverser les unités de filtration 12 et rejoindre la ligne 25 d'évacuation de concentrât, qui elle-même traverse les unités de récupération d'énergie, constitue une boucle secondaire sur laquelle repose le fonctionnement des modes d'exploitation.

En effet, c'est grâce à la gestions des débits et des pressions dans la boucle secondaire, que le débit $Q_7$ d'eau de mer traversant la pompe haute pression 7 peut donner, après son passage dans les unités de filtration, le débit $Q_{24}$ de perméat, ces débits $Q_7$ et $Q_{24}$ appartenant à la boucle primaire définie par l'alimentation des unités de filtration, les unités de filtration et la ligne de récupération de perméat.

En considérant maintenant le taux de conversion T, défini comme étant le rapport du débit de perméat au débit total d'alimentation des unités de filtration, on voit que :

$$T = Q_{24} / (Q_{13} + Q_7) = Q_7 / (Q_{13} + Q_7)$$

Sachant que le débit $Q_7$ de la pompe haute pression est fonction de la puissance disponible fournie par la source d'énergie renouvelable, et sachant que le débit $Q_{13}$ de la pompe Booster est maintenu à une valeur de consigne, il apparaît que le taux de conversion est directement fonction du débit de la pompe haute pression, lui-même directement lié à la puissance disponible fournie par la source d'énergie renouvelable.

Ainsi, le débit de perméat et le taux de conversion T associé (le taux de conversion étant égal au quotient du débit du perméat par la somme des débits de la pompe haute pression et de la pompe Booster) varient en permanence, en parallèle et de façon continue entre zéro et leur valeur maximum.

Selon une première variante de mode d'exploitation, le débit de la pompe Booster est maintenu à une valeur constante, choisie de manière à assurer un débit suffisant dans les unités de filtration tout en assurant une consommation raisonnable sur le plan énergétique. A titre illustratif, le débit de la pompe Booster peut être fixé à 5 m3/heure pour une unité de filtration.

En fonction de la puissance disponible fournie par la source d'énergie renouvelable, le débit de la pompe haute pression va varier, par exemple de 0 à 2,5 m3/heure. On obtient ainsi un débit total qui varie entre 5 et 7,5 m3/heure. Le taux de conversion (rapport entre le débit de perméat et le débit total d'alimentation des membranes) varie donc entre 0% et 33%. Le débit de perméat varie alors entre 0 et 2,5 m3/heure, de la même façon que le débit de l'eau de mer dans la pompe haute pression.

Selon une seconde variante de mode d'exploitation, le débit en sortie de la pompe Booster peut être asservi au débit de la pompe haute pression. L'asservissement du débit de la pompe Booster peut être une fonction discrète (par palier) ou bien continue de la puissance alimentant la pompe haute pression. En d'autres termes, en fonction du débit fourni par la pompe haute pression, la pompe Booster ajuste son propre débit en fonction de ce qui reste de la puissance disponible fournie par la source d'énergie renouvelable.

A titre d'exemple, si on fait varier le débit de la pompe Booster de 7 à 11 m3/heure en fonction du débit de la pompe haute pression qui varie lui-même de 1 à 5 m3/heure, un taux de conversion variant de 12.5% à presque 31% est réalisé. Il en résulte un débit de perméat croissant de 1 à 5 m3/heure.

Dans cette configuration, la pression de fonctionnement des membranes varie de plus ou moins 28 à plus ou moins 48 bars. Les membranes s'adaptent alors parfaitement automatiquement aux débits qui leur sont imposés, puisque toujours compris dans la gamme recommandé par les fournisseurs. Elles s'adaptent également aux autres paramètres physiques du circuit tels que la salinité et la température de l'eau à traiter. Selon ce mode de réalisation de l'invention, le débit de la pompe basse pression est contrôlé pour être sensiblement égal à la somme des débits de la pompe Booster et de la pompe haute pression. La pression de fonctionnement des membranes s'établit d'elle-même et n'est pas contrôlée autrement que par les débits des différentes pompes. Ceci est fondamentalement différent de l'art antérieur où l'on impose des pressions de fonctionnement aux membranes, ce qui définit des taux de conversion fixes.

Cette variante offre une grande flexibilité de fonctionnement et permet d'obtenir des taux de conversion proportionnels au débit de la pompe haute pression, donc variables. Ceci permet d'optimiser les consommations énergétiques et le fonctionnement de l'installation, notamment d'assurer une faible production en cas de puissance incidente limitée tout en garantissant les conditions recommandées de filtration tangentielle.

Avant l'atteinte d'un mode d'exploitation, le procédé de pilotage admet un mode de démarrage, dans lequel, les pompes sont démarrées successivement afin de remplir les divers circuits d'eau de mer.

Selon un premier mode de démarrage de l'installation, on ne procède à la mise en route successivement des pompes basse pression, Booster et haute pression, que lorsque la puissance fournie par les moyens d'alimentation dépasse une valeur de consigne $P_{HP0}$. En d'autres termes, il faut attendre que la puissance disponible fournie par la source d'énergie renouvelable atteigne un certain seuil de puissance $P_{HP0}$, apte à alimenter la pompe basse pression, la pompe Booster et la pompe haute pression.

Plus particulièrement, on démarre d'abord la pompe basse pression de sorte que de l'eau de mer alimente la ligne 21 puis une portion de la boucle 22 pour traverser ensuite les unités de récupération d'énergie et rejoindre l'issue 27 des rejets R.

Puis, la pompe Booster est démarrée de sorte que l'eau de mer, admise dans la ligne 21 puis dans une portion de la boucle 22, est renvoyée vers les unités de filtration 12 après son passage dans les unités de récupération d'énergie, au lieu de rejoindre l'issue 27 des rejets R. En sortie des unités de filtration 12, l'eau de mer non filtrée alimente la ligne d'évacuation 25 de concentrât puis est évacuée vers les rejets.

Enfin, la pompe haute pression est mise en route de sorte qu'une partie de l'eau de mer admise dans la ligne 21 traverse la pompe haute pression et est envoyée sous pression en entrée des unités de filtration. L'autre partie de l'eau de mer admise dans la ligne 21, rejoint la boucle 22 pour récupérer la pression présente dans la ligne d'évacuation de concentrât au moyen de l'échangeur de pression 14 et être régulé en débit. Notons que la pompe Booster la repressurise de manière à compenser les pertes de charges dues au passage dans les membranes et dans l'échangeur dont le rendement n'est pas de 100%. On atteint alors un mode d'exploitation dans lequel :

- le débit $Q_{25}$ dans la ligne d'évacuation de concentrât en sortie des unités de filtration, est maintenu lors de son passage dans les unités de récupération d'énergie, à une valeur sensiblement égale à la valeur du débit $Q_{13}$ produit par la pompe Booster,

- la pression en sortie de la pompe Booster est maintenue, au moyen de l'échangeur de pression 14, à une valeur égale à la valeur de la pression dans la ligne d'alimentation 21,

- le débit $Q_{24}$ de perméat en sortie des unités de filtration est sensiblement égal au débit $Q_7$ de la pompe haute pression.

Avantageusement, les mises en route de la pompe basse pression et de la pompe Booster sont suivies à chaque fois d'une temporisation $T_0$ comprise entre 5 et 35 s.

Il serait aussi possible d'envisager un autre mode de démarrage dans lequel on procèderait à la mise en route successivement des pompes basse pression, Booster et haute pression, lorsque la puissance fournie par les moyens d'alimentation dépasserait un premier, un second et un troisième palier permettant à chaque fois le démarrage de sa pompe associée.

Avantageusement, l'installation comprend en outre un bypass muni d'une vanne de régulation de pression permettant à la ligne d'évacuation de concentrât de court-circuiter les unités de récupération d'énergie. De cette façon, il est possible de piloter lors du démarrage de la pompe haute pression, la fermeture progressive de la vanne de régulation de pression 20 de sorte que l'augmentation de la pression traversant les unités de filtration reste inférieure à 1 bar/s, et préférentiellement inférieure à 0,5 bar/s. La vanne de régulation de pression est ensuite maintenue fermée pendant toute la durée de fonctionnement des unités de filtration.

Les membranes peuvent en effet fonctionner à des pressions variant de 20 à 65 bars selon les configurations exploitées (salinité de l'eau traitée), et avec des variations de pression de l'ordre de 0,7 bars par seconde selon les fournisseurs. Or dans le cadre de l'invention, les membranes fonctionnent avec des écarts de pression qui interviennent au démarrage de la pompe haute pression avec montée depuis la pression atmosphérique jusqu'à la pression osmotique (de l'ordre de 30 bars), et à l'arrêt de l'installation avec une baisse depuis les 30 bars de la pression osmotique jusqu'à la pression atmosphérique.

Avant l'atteinte d'un mode d'exploitation, la pompe Booster fonctionne sans la pompe haute pression et avec un débit supérieur au débit minimum de filtration tangentielle imposé par le fabricant de membranes, de l'ordre de 3 à 4 m3/h, soit par exemple avec un débit de 5 m3/h. La boucle primaire est à l'arrêt. Le débit entrant dans les membranes est strictement égal au débit sortant de concentrât des membranes. Il n'y a pas de production de perméat. La pression dans les unités de filtration 12 est très faible, de l'ordre de 1 bar.

Quand la puissance de la source d'énergie renouvelable augmente, la boucle secondaire continue de fonctionner au même débit, par exemple de 5 m3/h, et la boucle primaire se met en route avec fonctionnement de la pompe haute pression. Le débit entrant d'eau de mer dans les unités de filtration 12 correspond au débit de la boucle secondaire (5 m3/heure) augmenté du débit de la boucle primaire par exemple 0,5 m3/h, soit un total de 5,5 m3/h. Le débit sortant de concentrât est toujours de 5 m3/h. La différence entre le débit entrant de 5,5 m3/h et le débit sortant de concentrât de 5 m3/h correspond à la production de 0,5 m3/h de perméat, pour équilibrer les débits entrant et sortant des membranes. On constate ainsi que le débit de la pompe haute pression produit un débit sensiblement égal au débit de perméat (0,5 m3/h). Pour que ce perméat puisse être produit, la pression dans l'unité de filtration 12 doit atteindre progressivement puis dépasser la pression osmotique.

Au démarrage du fonctionnement de la pompe haute pression, la pression va donc augmenter dans les membranes et dans la boucle secondaire de récupération d'énergie jusqu'à un niveau de pression permettant la production de 0,5 m3 de perméat. Cette pression dépend principalement de la salinité (TDS) mais également des membranes choisies, de leur combinaison et d'autres paramètres comme la température. C'est une donnée intrinsèque aux membranes de filtration tangentielle à osmose inverse et à leur agencement. Selon ce fonctionnement, même pour de faibles débits de perméat, les membranes sont toujours alimentées avec des débits minimums de 4 m3/h supérieurs au débit minimum imposé par les fabricants pour permettre la filtration tangentielle de dépolarisation des membranes.

Un fonctionnement similaire est applicable pour des débits de la pompe haute pression variant de 0,5 m3/h jusqu'à 2,5 m3/h. Systématiquement les débits de perméat correspondront au débit de la pompe haute pression. Pour chaque débit de la pompe haute pression et de concentrât, le taux de conversion varie en passant dans l'exemple donné de 11,1% pour un débit de pompe haute pression (et donc de perméat) de 0,5 m3/h, à 38,5% pour un débit de la pompe haute pression (et donc de perméat) de 2,5 m3/h. Pour chaque débit de pompe haute pression, la pression dans les unités de filtration s'établit spontanément à des niveaux permettant des productions de perméat. Par exemple, 29 bar pour un débit de perméat de 0,5 m3/h, jusqu'à 49 bars pour un débit de perméat de 2,5 m3/h.

A titre d'exemple, la figure 3 et le tableau 1 ci-après mettent en corrélation, pour un débit constant de la pompe Booster, la puissance consommée par la pompe Booster et la pompe haute pression, le débit de la pompe haute pression (égal au débit de perméat), et la pression dans les unités de filtration. Il apparaît que le taux de conversion est directement lié à la puissance disponible fournit par la source d'énergie renouvelable.

Tableau 1

| Puissance consommée hors pompe basse pression (kW) | $Q_{13}$ (m3/h) | $Q_7$ (m3/h) | Taux de conversion T (%) | $Q_{24}$ (m3/h) | Pression Dans les unités de filtration (bars) |
|---|---|---|---|---|---|
| 0,3 | 5 | 0 | 0 | 0 | 1 |
| 1,5 | 5 | 0,5 | 9,1 | 0,5 | 29 |
| 2,4 | 5 | 1 | 16,7 | 1 | 33 |
| 3,6 | 5 | 1,5 | 23,1 | 1,5 | 38 |
| 4,8 | 5 | 2 | 28,6 | 2 | 44 |
| 6 | 5 | 2,5 | 33,3 | 2,5 | 49 |

Le procédé de pilotage peut comprendre aussi un mode d'arrêt de l'installation dans lequel les pompes haute pression, Booster et basse pression sont successivement mises à l'arrêt dès lors que la puissance fournie par les moyens d'alimentation devient inférieure à la valeur de consigne $P_{HP0}$. En d'autres termes, l'ensemble des pompes est mis à l'arrêt dès lors que la puissance disponible fournie par la source d'énergie renouvelable ne permet plus de produire du perméat.

Dans le cas où l'installation comprend en outre un bypass muni d'une vanne de régulation de pression permettant à la ligne d'évacuation de concentrât de court-circuiter les unités de récupération d'énergie, il est avantageux de contrôler l'ouverture progressive (par exemple à 0,5 l/seconde) de la vanne de régulation de pression 20 de sorte que la diminution de la pression osmotique dans les unités de filtration reste inférieure à 1 bar/s, préférentiellement inférieure à 0,5 bar/s, et ce, pour rester dans les limites fixées par les fabricants. En effet, lors de l'arrêt des pompes, la pression dans les unités de filtration reste élevée, c'est à dire de l'ordre de la pression osmotique (30 bars).

Lors de l'ouverture progressive de la vanne de régulation de pression, sous l'effet de la pression osmotique, du perméat issu des unités de traitement et de stockage d'eau douce est ré-aspiré dans les unités de filtration. Le perméat réintroduit chasse alors le concentrât qui s'évacue au travers de la ligne d'évacuation 25 vers les rejets via le bypass 26. Grâce aux clapets anti-retour 8 et 9, le concentrât ne peut remonter en amont et est contraint d'emprunter la ligne d'évacuation 25.

De ce fait le procédé de pilotage selon l'invention comprend en outre un mode de maintenance de l'installation qui consiste en un rétro lavage par les perméats, et qui intervient automatiquement dès l'arrêt des pompes. Cette circulation spontanée, parce qu'induite par la pression osmotique, permet au perméat de remplir les membranes d'eau douce en vue des conditionner pendant l'arrêt de l'installation.

Tel que représenté sur la figure 7 qui se réfère au cas où les moyens d'alimentation 23 comportent un générateur photovoltaïque 23g, il est nécessaire de recourir à un premier 23a, second 23b et troisième 23c convertisseur de puissance à fréquence variable, dédiés chacun à une seule pompe, et qui seront pilotés successivement selon un protocole MPPT (Maximum Power Point Tracking).

Ainsi, lors du démarrage de la pompe basse pression, cette dernière est asservie selon le protocole MPPT de manière à profiter de la puissance fournie par la source d'énergie renouvelable, dans la mesure où elle seule fonctionne. Lorsque la puissance fournie par le générateur photovoltaïque est suffisante, la pompe Booster est démarrée avec une recherche de type MPPT pour atteindre une valeur de consigne en débit. Lors de la mise en route de la pompe haute pression, les vitesses de fonctionnement de la pompe Booster et de la pompe basse pression sont ajustées au besoin de la pompe haute pression. La recherche du MPPT se déplace de la pompe basse pression à la pompe Booster puis à la pompe haute pression. On pourrait utiliser aussi d'autres convertisseurs du moment qu'ils permettent d'obtenir une vitesse variable à partir de la puissance disponible.

Dans le cas où la source d'énergie renouvelable est de type solaire, le cycle de pilotage de l'installation se déroule comme suit et tel qu'illustré en figure 3. En début de journée, lorsque la puissance $P_\varepsilon$ est suffisante, la pompe basse pression et la pompe Booster se mettent en marche, le débit de la pompe Booster étant assigné par exemple à une valeur de 5 m3/heure.

Lorsque la puissance incidente (due à l'intensité du soleil) atteint un certain niveau par exemple de 1,5 kW, la pompe haute pression démarre et suit l'augmentation de la puissance incidente (en passant par exemple par une valeur de 1 m3/heure, puis 2 m3/heure, pour atteindre 2,5 m3/heure). De ce fait le débit de perméat croît en passant par une valeur de 1 m3/heure, puis 2 m3/heure, pour atteindre 2,5 m3/heure. Le taux de conversion T (défini par : $Q_{24}$ / ($Q_{13}$ + $Q_7$)) suit une augmentation en passant par une valeur de 20 %, puis 29 % pour atteindre 38 %.

Le soir, lorsque la puissance $P_\varepsilon$ décroît, les courbes des débits s'inversent tout comme le taux de conversion. Lorsque la puissance $P_\varepsilon$ devient inférieure par exemple à 1,5 kW, la pompe haute pression s'arrête, les pompes basse pression et Booster continuent de fonctionner sur une durée définie pour permettre le remplacement des concentrâts à forte salinité, par de l'eau de mer à plus faible salinité. Cette phase permet le lavage des membranes avec du concentrât devenu de l'eau de mer donc à faible salinité.

Dans le cas où les moyens d'alimentation 23 comportent un aérogénérateur alimentant chacune des pompes basse pression, Booster et haute pression le cycle de pilotage de l'installation se déroule de manière similaire en fonction de la force du vent.

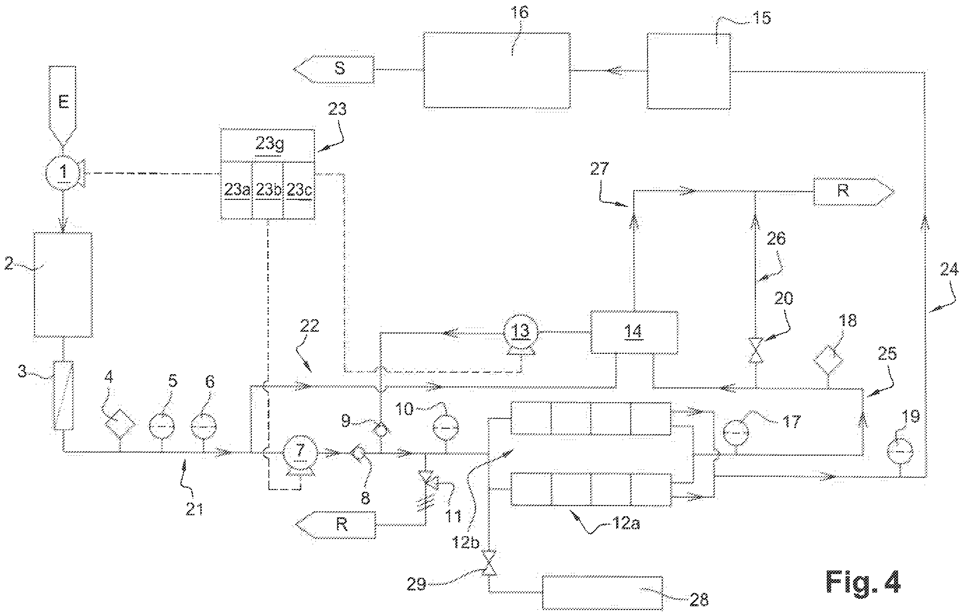

Tel que représenté en figure 4 et selon un perfectionnement, l'installation de dessalement comprend en outre un accumulateur de pression 28 piqué sur la ligne 21 d'alimentation en eau de mer, entre la pompe haute pression 7 et les unités de filtration 12a, 12b. L'accumulateur est apte à compenser les variations de pression en sortie de la pompe haute pression 7.

Ainsi, l'accumulateur de pression a pour fonction de stocker de l'eau de mer acheminée par la ligne 21 et la pompe haute pression, à une certaine pression et de la déverser dans la ligne 21 en direction des unités de filtration à cette même pression lorsque le fonctionnement de la pompe haute pression 7 fléchit, c'est-à-dire lorsque la pression de l'eau de mer issue de la pompe haute pression 7 diminue.

De même, lorsque la pression augmente dans la ligne 21, l'établissement de l'équilibre des pressions entre la pression dans la ligne 21 et dans l'enceinte tubulaire permet d'atténuer l'augmentation de la pression en entrée des unités de filtration.

De ce fait, l'accumulateur 28 permet d'amortir et de lisser les variations de pression dans la ligne 21 qui alimente les unités de filtration. Il permet notamment d'obtenir des rampes de variation inférieures à 0,5 bars/sec. Ainsi, la tenue mécanique des membranes est préservée.

Selon un mode de réalisation préféré décrit en figures 5 et 6, l'accumulateur de pression 28 est une enceinte tubulaire 282 communiquant avec la ligne 21 et renfermant un volume d'azote contenu dans une enveloppe à une pression initiale proche de la pression osmotique correspondant à la salinité de l'eau de mer, par exemple de 28 bars.

En d'autres termes, la pression de l'azote contenu dans l'enveloppe est la pression osmotique correspondant à la salinité de l'eau de mer.

Lorsque la pression en sortie de la pompe haute pression 7 s'élève dans la ligne 21, l'eau de mer pénètre dans l'enceinte tubulaire 282 via les deux ouvertures 283, 283' et comprime l'enveloppe 284, de sorte que l'azote se comprime à cette même pression.

Lorsque la pression en sortie de la pompe haute pression 7 diminue dans la ligne 21 (par exemple du fait d'une chute d'alimentation de la part de la source d'énergie renouvelable), l'enveloppe se détend de sorte que l'eau de mer accumulée dans l'enceinte tubulaire est renvoyée à une pression supérieure dans la ligne 21, augmentant ainsi la pression de l'eau de mer pénétrant dans les unités de filtration.

L'Homme du Métier saura dimensionner l'enceinte tubulaire 28 (de contenance de l'ordre de 120 l) ainsi que l'enveloppe 284 et définir la pression initiale de gonflage, de manière à ce que la pression dans l'enveloppe varie par exemple entre 28 et 60 bars. Cette dernière peut se présenter sous la forme d'une enveloppe en caoutchouc dont les extrémités sont coincées aux deux extrémités 285, 285' de l'enceinte tubulaire au moyen d'un bouchon respectivement 280, 280', et ce, de manière étanche au moyen de joints toriques 281, 281'.

L'accumulateur de pression peut faire l'objet d'autres modes de réalisation. Il peut comprendre un tube en acier ou en composite, et doté d'un piston coulissant séparant hermétiquement une enceinte renfermant un volume d'azote et une enceinte connectée à la ligne 21.

En conclusion, il est à noter que l'installation selon l'invention fonctionne avec des taux de conversion faibles à moyens, globalement inférieurs à 45%. Cette caractéristique permet de réduire la consommation énergétique des membranes et permet en outre de rejeter du concentrât de faible salinité, de l'ordre de 45g à 50g/litre alors que les installations connues rejettent couramment du concentrât ayant une salinité de l'ordre de 90g/litre. L'impact environnemental est donc moindre, et ceci constitue un réel avantage de l'invention.

En outre l'installation permet, lorsque la puissance de l'énergie incidente est faible, un fonctionnement à taux de conversion nul. Dans ces conditions l'installation permet un balayage du colmatage formé sur les membranes avec de l'eau de mer à faible salinité. En effet c'est de l'eau de mer qui circule alors dans les membranes, via la pompe Booster. Ces conditions opératoires, en plus du rétro lavage opéré lors de l'arrêt de l'installation, contribuent à augmenter la durée de vie des membranes.

Bien sûr, l'invention n'est pas limitée aux exemples qui viennent d'être décrits et de nombreux aménagements peuvent être apportés à ces exemples sans sortir du cadre de l'invention. De plus, les différentes caractéristiques, formes, variantes et modes de réalisation de l'invention peuvent être associés les uns avec les autres selon diverses combinaisons dans la mesure où ils ne sont pas incompatibles ou exclusifs les uns des autres.

## Revendications

1. Procédé de pilotage d'une installation de dessalement comprenant au moins :

   - une ligne (21) d'alimentation en eau de mer d'au moins une unité de filtration dotée de membranes de filtration tangentielle à osmose inverse (12, 12a, 12b), ladite ligne d'alimentation étant dotée successivement en partant de son entrée (E) d'une première pompe basse pression (1) et d'une seconde pompe haute pression (7) dont le débit est proportionnel à la vitesse de rotation,
   - une ligne (24) d'évacuation de perméat issus des membranes vers une unité de traitement et de stockage d'eau douce (15, 16),
   - une ligne (25) d'évacuation de concentrât,
   - une boucle (22) piquée sur la ligne d'alimentation (21) en amont et en aval de la pompe haute pression, la boucle traversant une unité de récupération d'énergie dotée d'un échangeur de pression (14) et d'une pompe (13) dite « Booster », ladite boucle étant également connectée à la ligne (25) d'évacuation de concentrât, ladite ligne d'évacuation traversant l'échangeur de pression (14),
   - des moyens d'alimentation (23) en courant issu d'une source d'énergie renouvelable et alimentant suivant des puissances variables les pompes basse pression, haute pression et Booster, les moyens d'alimentation (23) comportant un générateur photovoltaïque (23g) alimentant chacune des pompes basse pression, Booster et haute pression au moyen d'un, respectivement, premier (23a), second (23b) et troisième (23c) convertisseur de puissance à fréquence variable (23), lesdits convertisseurs de puissance étant pilotés selon un protocole MPPT (Maximum Power Point Tracking),

   **caractérisé en ce que** le procédé de pilotage comprend au moins un mode d'exploitation dans lequel :

   - le débit $Q_{25}$ dans ligne (25) d'évacuation de concentrât est maintenu lors de son passage dans l'unité de récupération d'énergie, à une valeur sensiblement égale (la différence entre les débits n'excédant pas 5%) à celle du débit $Q_{13}$ de la pompe Booster, lui-même maintenu supérieur à un seuil $Q_{13min}$, correspondant au débit minimum $Q_{12min}$ requis pour le fonctionnement des unités de filtration,
   - la pression en sortie de la pompe Booster est maintenue à une valeur égale à celle de la pression en sortie de la pompe haute pression (7),
   - le débit $Q_7$ de la pompe haute pression est fonction de la fréquence et de la puissance du courant fourni par les moyens d'alimentation,
   de sorte que le débit $Q_{24}$ de perméat en sortie la au moins une unité de filtration (12, 12a, 12b) est sensiblement (la différence entre les débits n'excédant pas 5%) égal au débit $Q_7$ de la pompe haute pression.

**2.** Procédé de pilotage selon la revendication 1, **caractérisé en ce que** le procédé de pilotage comprend un premier mode de démarrage de l'installation comprenant la mise en route successivement des pompes basse pression, Booster et haute pression dès lors que la puissance fournie par les moyens d'alimentation (23) dépasse une valeur de consigne $P_{HP0}$.

**3.** Procédé de pilotage selon la revendication 1 ou 2, **caractérisé en ce que** le taux de conversion, défini par le quotient entre le débit de perméat et la somme du débit de la pompe haute pression et du débit de la pompe Booster, reste inférieur à 40 %, de sorte que le rendement des membranes est optimisé et que la salinité des concentrâts reste faible.

**4.** Procédé de pilotage selon l'une quelconque des revendications précédentes, et dans lequel l'installation comprend en outre un bypass (26) muni d'une vanne de régulation de pression (20) permettant de court-circuiter la ligne d'évacuation de concentrât (25), **caractérisé en ce que** lors du démarrage de la pompe haute pression, on pilote la fermeture progressive de la vanne de régulation de pression de sorte que l'augmentation de la pression traversant les unités de filtration reste inférieure à 1 bar/s, préférentiellement 0.5 bar/s.

**5.** Procédé de pilotage selon l'une quelconque des revendications précédentes, **caractérisé en ce qu'**en mode d'exploitation, le débit en sortie de la pompe Booster est maintenu à une valeur constante.

**6.** Procédé de pilotage selon l'une quelconque des revendications 1 à 4, **caractérisé en ce qu'**en mode d'exploitation, le débit en sortie de la pompe Booster est asservi par palier ou en continu au débit de la pompe haute pression.

**7.** Procédé de pilotage selon l'une quelconque des revendications précédentes, **caractérisé en ce qu'**il comprend au moins un mode d'arrêt de l'installation dans lequel les pompes haute pression, Booster et basse pression sont successivement mises à l'arrêt dès lors que la puissance fournie par les moyens d'alimentation (23) devient inférieure à une valeur de consigne $P_{HP0}$.

**8.** Procédé de pilotage selon la revendication précédente, et dans lequel l'installation comprend en outre un bypass (26) muni d'une vanne de régulation de pression (20) permettant à la ligne (25) d'évacuation de concentrât de court-circuiter la ligne d'évacuation de concentrât (25), **caractérisé en ce que** le mode d'arrêt de l'installation comprend l'ouverture progressive de la vanne de régulation de pression, de sorte que, sous l'effet de la pression osmotique, du perméat issu des unités de traitement et de stockage d'eau douce (15, 16) est aspiré dans les unités de filtration pour chasser le concentrât vers les rejets via le bypass (26) et conditionner les membranes en eau douce.

**9.** Procédé de pilotage selon la revendication précédente, **caractérisé en ce que** l'ouverture progressive de la vanne de régulation de pression est contrôlée de sorte que la diminution de la pression dans les unités de filtration reste inférieure à 1 bar/s, préférentiellement 0.5 bar/s.

**10.** Procédé de pilotage selon l'une quelconque des revendications 1 à 9, **caractérisé en ce que** le débit de perméats et le taux de conversion évoluent de manière continue et parallèle, entre zéro et une valeur maximum, et ce, en fonction de la puissance fournie par les moyens d'alimentation (23) en courant.

**11.** Procédé de pilotage selon l'une quelconque des revendications 1 à 10, **caractérisé en ce que** l'installation de dessalement comprend en outre un accumulateur de pression (28) piqué sur la ligne (21) d'alimentation en eau de mer, entre la pompe haute pression (7) et l'unité de filtration (12, 12a, 12b), ledit accumulateur étant apte à compenser les variations de pression en sortie de la pompe haute pression (7), selon des rampes de variation inférieures à 0,5 bars/sec.

**12.** Installation de dessalement comprenant au moins :

- une ligne (21) d'alimentation en eau de mer d'au moins une unité de filtration dotée de membranes de filtration tangentielle à osmose inverse (12a), ladite ligne d'alimentation étant dotée successivement en partant de son entrée (E) d'une première pompe basse pression (1) et d'une seconde pompe haute pression (7) dont le débit est fonction de la fréquence et de la puissance du courant fourni par les moyens d'alimentation, et préférentiellement proportionnel à la fréquence et à la puissance du courant fourni par les moyens d'alimentation,
- une ligne (24) d'évacuation de perméat issus des membranes vers une unité de traitement et de stockage d'eau douce (15, 16),
- une ligne (25) d'évacuation de concentrât,
- une boucle (22) piquée sur la ligne d'alimentation (21) en amont et en aval de la pompe haute pression, la boucle traversant une unité de récupération d'énergie dotée d'un échangeur de pression (14) et d'une pompe (13) dite « Booster », ladite boucle étant également connectée à la ligne (25) d'évacuation de concentrât, ladite ligne d'évacuation traversant l'échangeur de pression (14),

- des moyens d'alimentation (23) en courant issue d'une source d'énergie renouvelable et alimentant suivant des fréquences et des puissances variables les pompes basse pression, haute pression et Booster,

les moyens d'alimentation (23) comportant un générateur photovoltaïque alimentant chacune des pompes basse pression, Booster et haute pression au moyen d'un, respectivement, premier, second et troisième convertisseurs de puissance à fréquence variable, lesdits convertisseurs de puissance étant pilotés selon un protocole MPPT (Maximum Power Point Tracking).

L'installation comprenant en outre un bypass (26) muni d'une vanne de régulation de pression (20), permettant à la ligne (25) d'évacuation de concentrât de court-circuiter les unités de récupération d'énergie.

**13.** Installation de dessalement selon la revendication 12, **caractérisée en ce que** la ligne d'alimentation en eau de mer comprend en aval de la pompe basse pression (1) et en amont du piquage de la boucle situé en amont de la pompe haute pression, un bloc de prétraitement (2) suivi d'un préfiltre (3), lui-même suivi d'un purgeur d'air (4).

**14.** Installation de dessalement selon l'une quelconque des revendications 12 à 13, **caractérisée en ce que** la pompe haute pression est une pompe volumétrique.

**15.** Installation de dessalement selon l'une quelconque des revendications 12 à 14, **caractérisée en ce que** l'installation de dessalement comprend en outre un accumulateur de pression (28) piqué sur la ligne (21) d'alimentation en eau de mer, entre la pompe haute pression (7) et l'unité de filtration (12, 12a, 12b), ledit accumulateur étant apte à compenser les chutes de pression en sortie de la pompe haute pression (7).

**16.** Installation de dessalement selon la revendication 15, **caractérisée en ce que** l'accumulateur de pression (28) est une enceinte tubulaire (282) communiquant avec la ligne (21) et renfermant un volume d'azote contenu dans une enveloppe (284) à une pression initiale proche de la pression osmotique correspondant à la salinité de l'eau de mer, par exemple 28 bars.

## Patentansprüche

**1.** Verfahren zur Steuerung einer Entsalzungsanlage, welche mindestens aufweist:

- eine Leitung (21) zum Zuführen von Meerwasser zu mindestens einer Filterungseinheit, die mit tangentialen Umkehrosmose-Filtermembranen (12, 12a, 12b) versehen ist, wobei die Zuführleitung ausgehend von ihrem Einlass (E) nacheinander mit einer ersten Niederdruckpumpe (1) und einer zweiten Hochdruckpumpe (7) versehen ist, deren Fördermenge proportional zur Drehgeschwindigkeit ist,
- eine Leitung (24) zum Abführen von aus den Membranen austretendem Permeat zu einer Süßwasserbehandlungs- und -speichereinheit (15, 16),
- eine Leitung (25) zum Abführen von Konzentrat,
- ein Kreis (22), der von der Zuführleitung (21) stromaufwärts und stromabwärts der Hochdruckpumpe abzweigt, wobei der Kreis eine Energierückgewinnungseinheit passiert, welche mit einem Drucktauscher (14) und einer als "Booster" bezeichneten Pumpe (13) versehen ist, wobei der Kreis ebenfalls mit der Leitung (25) zum Abführen von Konzentrat verbunden ist, wobei die Abführleitung den Drucktauscher (14) passiert,
- Einrichtungen (23) zur Versorgung mit aus einer regenerierbaren Energiequelle kommendem Strom und zum Versorgen der Niederdruckpumpe, der Hochdruckpumpe und der Booster-Pumpe mit variablen Leistungen, wobei die Versorgungseinrichtungen (23) einen Photovoltaikgenerator (23g) aufweisen, der die Niederdruckpumpe, die Booster-Pumpe und die Hochdruckpumpe jeweils mittels eines ersten (23a), eines zweiten (23b) bzw. eines dritten (23c) Leistungswandlers (23) mit variabler Frequenz speist, wobei die Leistungswandler nach einem MPPT-Protokoll (Maximum Power Point Tracking) gesteuert werden,

**dadurch gekennzeichnet, dass** das Steuerverfahren mindestens eine Betriebsart aufweist, in welcher:

- die Fördermenge $Q_{25}$ in der Leitung (25) zum Abführen von Konzentrat während dessen Übergang in die Energierückgewinnungseinheit auf einem Wert gehalten wird, der im Wesentlichen gleich (die Differenz zwischen den Fördermengen übersteigt 5% nicht) demjenigen der Fördermenge $Q_{13}$ der Booster-Pumpe ist, welcher seinerseits über einem Schwellenwert $Q_{13min}$ gehalten wird, welcher der Mindestfördermenge $Q_{12min}$ entspricht, die für den Betrieb der Filtrierungseinheiten erforderlich ist,
- der Druck am Ausgang der Booster-Pumpe auf einem Wert gehalten wird, der gleich demjenigen des Drucks am Ausgang der Hochdruckpumpe (7) ist,
- die Fördermenge $Q_7$ der Hochdruckpumpe von der Frequenz und der Leistung des von den Versorgungseinrichtungen zugeführten Stroms ist,

derart, dass die Fördermenge $Q_{24}$ an Permeat am Ausgang der mindestens einen Filtrierungseinheit (12, 12a, 12b) im Wesentlichen (die Differenz zwischen den Fördermengen übersteigt 5% nicht) gleich der Fördermenge $Q_7$ der Hochdruckpumpe ist.

2. Steuerverfahren nach Anspruch 1, **dadurch gekennzeichnet, dass** das Steuerverfahren einen ersten Modus des Startens der Anlage aufweist, welcher das nacheinander erfolgende Anfahren der Niederdruckpumpe, der Booster-Pumpe und der Hochdruckpumpe aufweist, sobald die von den Versorgungseinrichtungen (23) zugeführte Leistung einen Sollwert $P_{HP0}$ übersteigt.

3. Steuerverfahren nach Anspruch 1 oder 2, **dadurch gekennzeichnet, dass** die Umwandlungsrate, die durch den Quotienten aus der Permeatfördermenge und der Summe der Fördermenge des Hochdruckpumpe und der Fördermenge der Booster-Pumpe definiert ist, geringer als 40% bleibt, so dass der Wirkungsgrad der Membranen optimiert ist, und der Salzgehalt der Konzentrate gering bleibt.

4. Steuerverfahren nach einem der vorhergehenden Ansprüche, und bei welchem die Anlage ferner einen Bypass (26) aufweist, der mit einem Druckregelventil (20) versehen ist, welches ein Umgehen der Leitung (25) zum Abführen von Konzentrat ermöglicht, **dadurch gekennzeichnet, dass** beim Starten der Hochdruckpumpe das progressive Schließen des Druckregelventils derart gesteuert wird, dass die Erhöhung des die Filterungseinheiten passierenden Drucks unter 1 bar/s, vorzugsweise 0,5 bar/s, bleibt.

5. Steuerverfahren nach einem der vorhergehenden Ansprüche, **dadurch gekennzeichnet, dass** die Fördermenge am Ausgang der Booster-Pumpe im Betriebsmodus auf einem konstanten Wert gehalten wird.

6. Steuerverfahren nach einem der Ansprüche 1 bis 4, **dadurch gekennzeichnet, dass** die Fördermenge am Ausgang der Booster-Pumpe im Betriebsmodus stufenweise oder kontinuierlich durch die Fördermenge der Hochdruckpumpe geregelt wird.

7. Steuerverfahren nach einem der vorhergehenden Ansprüche, **dadurch gekennzeichnet, dass** es mindestens einen Anlagenstoppmodus aufweist, bei welchem die Hochdruckpumpe, die Booster-Pumpe und die Niederdruckpumpe nacheinander gestoppt werden, sobald die von den Versorgungseinrichtungen (23) zugeführte Leistung unter einen Sollwert $P_{HP0}$ fällt.

8. Steuerverfahren nach dem vorhergehenden Anspruch, und bei welchem die Anlage ferner einen Bypass (26) aufweist, der mit einem Druckregelventil (20) versehen ist, welches der Leitung (25) zum Abführen des Konzentrats ermöglicht, die Leitung zum Abführen des Konzentrats (25) zu umgehen, **dadurch gekennzeichnet, dass** der Anlagenstoppmodus das progressive Öffnen des Druckregelventils aufweist, derart, dass unter der Wirkung des osmotischen Drucks, aus den Süßwasserbehandlungs- und -speichereinheiten (15, 16) kommendes Permeat in die Filterungseinheiten angesaugt wird, um das Konzentrat über den Bypass (26) zu den Abfällen auszutreiben und die Membranen mit Süßwasser zu konditionieren.

9. Steuerverfahren nach dem vorhergehenden Anspruch, **dadurch gekennzeichnet, dass** das progressive Öffnen des Druckregelventils derart gesteuert wird, das die Verringerung des Drucks in den Filterungseinheiten unter 1 bar/s, vorzugsweise 0,5 bar/s, bleibt.

10. Steuerverfahren nach einem der Ansprüche 1 bis 9, **dadurch gekennzeichnet, dass** die Fördermenge an Permeaten und der Umwandlungsgrad sich kontinuierlich und parallel zwischen null und einem Maximalwert entwickeln, und dies in Abhängigkeit von der durch die Stromversorgungseinrichtungen (23) gelieferten Leistung.

11. Steuerverfahren nach einem der Ansprüche 1 bis 10, **dadurch gekennzeichnet, dass** die Entsalzungsanlage ferner einen Druckspeicher (28) aufweist, der zwischen der Hochdruckpumpe (7) und der Filtrierungseinheit (12, 12a, 12b) von der Meerwasserzufuhrleitung (21) abgezweigt ist, wobei der Speicher in der Lage ist, die Druckschwankungen am Ausgang der Hochdruckpumpe (7) gemäß Schwankungsrampen von weniger als 0,5 bar/sec zu kompensieren.

**12.** Entsalzungsanlage, welche mindestens aufweist:

- eine Leitung (21) zum Zuführen von Meerwasser zu mindestens einer Filterungseinheit, die mit tangentialen Umkehrosmose-Filtermembranen (12, 12a, 12b) versehen ist, wobei die Zuführleitung ausgehend von ihrem Einlass (E) nacheinander mit einer ersten Niederdruckpumpe (1) und einer zweiten Hochdruckpumpe (7) versehen ist, deren Fördermenge von der Frequenz und der Leistung des von den Versorgungseinrichtungen gelieferten Stroms abhängig ist und vorzugsweise proportional zur Frequenz und zur Leistung des von den Versorgungseinrichtungen gelieferten Stroms ist,
- eine Leitung (24) zum Abführen von aus den Membranen austretendem Permeat zu einer Süßwasserbehandlungs- und -speichereinheit (15, 16),
- eine Leitung (25) zum Abführen von Konzentrat,
- ein Kreis (22), der von der Zuführleitung (21) stromaufwärts und stromabwärts der Hochdruckpumpe abzweigt, wobei der Kreis eine Energierückgewinnungseinheit passiert, welche mit einem Drucktauscher (14) und einer als "Booster" bezeichneten Pumpe (13) versehen ist, wobei der Kreis ebenfalls mit der Leitung (25) zum Abführen von Konzentrat verbunden ist, wobei die Abführleitung den Drucktauscher (14) passiert,
- Einrichtungen (23) zur Versorgung mit aus einer regenerierbaren Energiequelle kommendem Strom und zum Versorgen der Niederdruckpumpe, der Hochdruckpumpe und der Booster-Pumpe mit variablen Frequenzen und Leistungen,

wobei die Versorgungseinrichtungen (23) einen Photovoltaikgenerator (23g) aufweisen, der die Niederdruckpumpe, die Booster-Pumpe und die Hochdruckpumpe jeweils mittels eines ersten (23a), eines zweiten (23b) bzw. eines dritten Leistungswandlers (23) mit variabler Frequenz speist, wobei die Leistungswandler nach einem MPPT-Protokoll (Maximum Power Point Tracking) gesteuert werden.
wobei die Entsalzungsanlage einen Bypass (26) aufweist, der mit einem Druckregelventil (20) versehen ist, welches der Leitung (25) zum Abführen des Konzentrats die Energierückgewinnungseinrichtungen zu umgehen.

**13.** Entsalzungsanlage nach Anspruch 12, **dadurch gekennzeichnet, dass** die Meerwasserzufuhrleitung stromabwärts der Niederdruckpumpe (1) und stromaufwärts des stromaufwärts der Hochdruckpumpe befindlichen Abzweigs von dem Kreis einen Vorbehandlungsblock (2) aufweist, dem ein Vorfilter (3) folgt, welchem seinerseits ein Entlüfter (4) folgt.

**14.** Entsalzungsanlage nach einem der Ansprüche 12 bis 13, **dadurch gekennzeichnet, dass** die Hochdruckpumpe eine Verdrängerpumpe ist.

**15.** Entsalzungsanlage nach einem der Ansprüche 12 bis 14, **dadurch gekennzeichnet, dass** die Entsalzungsanlage ferner einen Druckspeicher (28) aufweist, der zwischen der Hochdruckpumpe (7) und der Filterungseinheit (12, 12a, 12b) von der Meerwasserzufuhrleitung (21) abgezweigt ist, wobei der Speicher in der Lage ist, den Druckabfall am Ausgang der Hochdruckpumpe (7) zu kompensieren.

**16.** Entsalzungsanlage nach Anspruch 15, **dadurch gekennzeichnet, dass** der Drucksammler (28) ein rohrförmiger Behälter (282) ist, der mit der Leitung (21) in Verbindung steht und ein Stickstoffvolumen enthält, das in einem Gehäuse (284) bei einem Ausgangsdruck nahe dem osmotischen Druck, der dem Salzgehalt des Meerwassers, beispielsweise 28 bar, entspricht, enthalten ist.

## Claims

**1.** Process for controlling a desalination plant comprising at least:

- a line (21) for feeding seawater to at least one filtration unit equipped with reverse osmosis tangential flow filtration membranes (12, 12a, 12b), said feed line being successively equipped, starting from its inlet (E), with a low-pressure first pump (1) and a high-pressure second pump (7), the flow rate of which is proportional to the speed of rotation,
- a permeate discharge line (24) for discharging permeate from the membranes to a fresh water treatment and storage unit (15, 16),

- a concentrate discharge line (25),
- a loop (22) branched off the feed line (21) upstream and downstream of the high-pressure pump, the loop passing through an energy recovery unit equipped with a pressure exchanger (14) and a pump (13) referred to as a booster pump, said loop also being connected to the concentrate discharge line (25), said discharge line passing through the pressure exchanger (14),
- current supply means (23) for supplying current derived from a renewable energy source and subsequently supplying variable powers to the low-pressure, high-pressure and booster pumps, the supply means (23) comprising a photovoltaic generator (23g) supplying each of the low-pressure, booster and high-pressure pumps by means of a respectively first (23a), second (23b) and third (23c) variable frequency power converter (23), said power converters being controlled according to an MPPT (maximum power point tracking) protocol.

**characterized in that** the control process comprises at least one operating mode in which:

- the flow rate $Q_{25}$ in the concentrate discharge line (25) is maintained, while it passes into the energy recovery unit, at a value substantially equal (the difference between the flow rates not exceeding 5%) to that of the flow rate $Q_{13}$ of the booster pump, which is itself maintained above a threshold $Q_{13min}$, corresponding to the minimum flow rate $Q_{12min}$ required for the operation of the filtration units,
- the pressure at the outlet of the booster pump is maintained at a value equal to that of the pressure at the outlet of the high-pressure pump (7),
- the flow rate $Q_7$ of the high-pressure pump is a function of the frequency and of the power of the current supplied by the supply means,

so that the flow rate $Q_{24}$ of permeate at the outlet of the at least one filtration unit (12, 12a, 12b) is substantially equal (the difference between the flow rates not exceeding 5%) to the flow rate $Q_7$ of the high-pressure pump.

2. Control process according to Claim 1, **characterized in that** the control process comprises a first method of starting up the plant comprising successively switching on the low-pressure, booster and high-pressure pumps as soon as the power supplied by the supply means (23) exceeds a setpoint value $P_{HP0}$.

3. Control process according to Claim 1 or 2, **characterized in that** the degree of conversion, defined by the quotient between the permeate flow rate and the sum of the flow rate of the high-pressure pump and the flow rate of the booster pump, remains less than 40%, so that the efficiency of the membranes is optimized and the salinity of the concentrates remains low.

4. Control process according to any one of the preceding claims, and in which the plant also comprises a bypass (26) equipped with a pressure-control valve (20) that makes it possible to short-circuit the concentrate discharge line (25), **characterized in that** during the start-up of the high-pressure pump, the gradual closure of the pressure-control valve is controlled so that the increase in pressure crossing the filtration units remains less than 1 bar/s, preferentially 0.5 bar/s.

5. Control process according to any one of the preceding claims, **characterized in that**, in operating mode, the flow rate at the outlet of the booster pump is maintained at a constant value.

6. Control process according to any one of Claims 1 to 4, **characterized in that**, in operating mode, the flow rate at the outlet of the booster pump is slaved, stepwise or continuously, to the flow rate of the high-pressure pump.

7. Control process according to any one of the preceding claims, **characterized in that** it comprises at least one method of shutting down the plant in which the high-pressure, booster and low-pressure pumps are successively switched off as soon as the power supplied by the supply means (23) becomes less than a setpoint value $P_{HP0}$.

8. Control process according to any one of the preceding claims, and in which the plant also comprises a bypass (26) equipped with a pressure-control valve (20) enabling the concentrate discharge line (25) to short-circuit the concentrate discharge line (25), **characterized in that** the method of shutting down the plant comprises the gradual opening of the pressure-control valve so that, under the effect of the osmotic pressure, permeate from the fresh water treatment and storage units (15, 16) is sucked into the filtration units in order to flush the concentrate towards the reject stream via the bypass (26) and to condition the membranes with fresh water.

9. Control process according to preceding claim, **characterized in that** the gradual opening of the pressure-control valve is controlled so that the reduction in the pressure in the filtration units remains less than 1 bar/s, preferentially 0.5 bar/s.

10. Control process according to any one of Claims 1 to 9, **characterized in that** the flow rate of permeates and the degree of conversion change continuously and concurrently, between zero and a maximum value, as a function of the power supplied by the current supply means (23).

11. Control process according to any one of Claims 1 to 10, **characterized in that** the desalination plant also comprises a pressure accumulator (28) branched off the seawater feed line (21), between the high-pressure pump (7) and the filtration unit (12, 12a, 12b), said accumulator being capable of compensating for the pressure variations at the outlet of the high-pressure pump (7), in accordance with gradients of variation of less than 0.5 bar/s.

12. Desalination plant comprising at least:

    - a line (21) for feeding seawater to at least one filtration unit equipped with reverse osmosis tangential flow filtration membranes (12a), said feed line being successively equipped, starting from its inlet (E), with a low-pressure first pump (1) and a high-pressure second pump (7), the flow rate of which is a function of the frequency and of the power of the current supplied by the supply means, and preferably proportional to the frequency and the power of the current supplied by the supply means,
    - a permeate discharge line (24) for discharging permeate from the membranes to a fresh water treatment and storage unit (15, 16),
    - a concentrate discharge line (25),
    - a loop (22) branched off the feed line (21) upstream and downstream of the high-pressure pump, the loop passing through an energy recovery unit equipped with a pressure exchanger (14) and a pump (13) referred to as a booster pump, said loop also being connected to the concentrate discharge line (25), said discharge line passing through the pressure exchanger (14),
    - current supply means (23) for supplying current derived from a renewable energy source and subsequently supplying variable frequencies and powers to the low-pressure, high-pressure and booster pumps,
    - the supply means (23) comprising a photovoltaic generator supplying each of the low-pressure, booster and high-pressure pumps by means of a respectively first, second and third variable frequency power converter, said power converters being controlled according to an MPPT (maximum power point tracking) protocol,
    - the desalination plant comprising moreover a bypass (26) equipped with a pressure-control valve (20) enabling the concentrate discharge line (25) to short-circuit the energy recovery units.

13. Desalination plant according to Claim 12, **characterized in that** the seawater feed line comprises, downstream of the low-pressure pump (1) and upstream of the branch connection of the loop located upstream of the high-pressure pump, a pretreatment unit (2) followed by a prefilter (3), itself followed by an air purger (4).

14. Desalination plant according to either one of Claims 12 to 13, **characterized in that** the high-pressure pump is a volumetric pump.

15. Desalination plant according to any one of Claims 12 to 14, **characterized in that** the desalination plant also comprises a pressure accumulator (28) branched off the seawater feed line (21), between the high-pressure pump (7) and the filtration unit (12, 12a, 12b), said accumulator being capable of compensating for the pressure drops at the outlet of the high-pressure pump (7).

16. Desalination plant according to Claim 15, **characterized in that** the pressure accumulator (28) is a tubular chamber (282) that communicates with the line (21) and that contains a volume of nitrogen contained in an envelope (284) at an initial pressure close to the osmotic pressure corresponding to the salinity of the seawater, for example 28 bar.

Fig. 1

$Q_7 = Q_{24}$
$Q_{13} = Q_{25}$
$$T = \frac{Q_{24}}{Q_{13} + Q_7}$$

Fig. 2

Fig. 3

Fig. 4

Fig. 5

Fig. 6

Fig. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2933969
- CN 202808493 U
- CN 202358969 U
- CN 203593678 U
- CN 103964549 A